# EUROPEAN PATENT APPLICATION

(11) **EP 3 904 838 A1**
(43) Date of publication of application: **03.11.2021**
(21) Application number: 19901741.9
(22) Date of filing: 02.08.2019
(51) Int. Cl.: G01D 7/08, G01J 5/48

(54) **MEASUREMENT SYSTEM, MEASUREMENT DEVICE, MEASUREMENT METHOD, AND PROGRAM**

(30) Priority: 27.12.2018 JP 2018244373
(71) Applicant: HORIBA, Ltd., Minami-ku Kyoto-shi Kyoto 601-8510 (JP)
(72) Inventor: NAGAOKA, Eiichi, Kyoto-shi, Kyoto 601-8510 (JP); KATSUDA, Toshihiro, Kyoto-shi, Kyoto 601-8510 (JP)
(74) Representative: Isarpatent
(86) International application number: PCT/JP2019/030479
(87) International publication number: WO 2020/136969

(57) **Abstract**

To accurately and clearly display measurement result and measurement position in an image containing a measurement position of physical quantity measured in a non-contact way, a measurement system 100 includes: a radiation thermometer 1 including an infrared sensor 11 that measures temperature at a certain measurement position in a non-contact way and a light source 13 that emits an instruction light PL toward the measurement position; an image acquisition sensor 33 that acquires a measurement position image containing a temperature measurement position; a detection unit 41 that detects a position where the instruction light PL exists in the measurement position image to determine a position corresponding to the measurement position in the measurement position image; and a measurement result image generating unit 42 that generates a measurement result image RI by superimposing, on the measurement position image, the temperature measurement result and an identification mark that indicates that a position detected by the detection unit 41 is a measurement position of the physical quantity.

## Description

### TECHNICAL FIELD

The present invention relates to a measurement system, a measurement device, a measurement method, and a program that allows a computer to execute the measurement method, which measure physical quantity at a distant measurement position in a non-contact way, acquire an image containing the measurement position, and superimpose and display the measurement result of physical quantity on the image.

### BACKGROUND ART

Conventionally, systems have been known that measure physical quantity of a distant measurement position in a non-contact way, and acquire an image containing the measurement position (refer to Patent Citation 1, for example.).

In this system, when an image containing the measurement object is acquired and the image includes an image that may need a further inspection on the measuring object, a non-contact inspection is performed on the measuring object. After the non-contact inspection, the inspection result of the non-contact inspection is stored, and the image that contains the figure on which the non-contact inspection was performed is also stored.

### PRIOR ART DOCUMENTS

### PATENT CITATION

[Patent Citation 1] JP2014-132437A

### SUMMARY OF INVENTION

### TECHNICAL PROBLEM

In the conventional system, neither the inspection result of the non-contact inspection nor the image containing the figure on which the non-contact inspection was performed includes the specific information about the position where the non-contact inspection was performed in the image. Accordingly, since a user of the conventional system cannot visually identify the position on which the non-contact inspection was performed from the image, the data acquired by the conventional system has low reliability.

As a way of showing the measurement position where the non-contact inspection was performed in the acquired image, it is considered that a laser spot of the laser pointer indicating the measurement position of the physical quantity is reflected at a measuring object such that the acquired image contains the reflected laser spot.

However, since, if size and shape (the spot diameter) of the spot contained in the image is small, such as a case in which the measurement position is far away, it is impossible to precisely and clearly identify the measurement point just by seeing the image, the data has low reliability.

It is an object of the present invention to precisely and clearly display the measurement position of the physical quantity on the image, when the measurement result of physical quantity measured in a non-contact way is superimposed on the image containing the measurement position of the physical quantity.

### TECHNICAL SOLUTION

Aspects of the present invention are described below as the technical solution. These aspects can be arbitrarily combined as needed.

A measurement system according to one aspect of the present invention, includes a physical quantity measurement device, an image acquisition sensor, a detecting unit, and a measurement result image generation unit.

The physical quantity measurement device includes a physical quantity sensor that detects physical quantity at a measurement position in a non-contact way, and a light source that emits an instruction light toward the measurement position.

The image acquisition sensor acquires a measurement position image including the measurement position.

The detecting unit detects a position where the instruction light exists in the measurement position image to detect a position corresponding to the measurement position in the measurement position image.

The measurement result image generation unit generates a measurement result image by superimposing, on the measurement position image, the measurement result of physical quantity measured by the physical quantity sensor and an identification mark indicating that the position detected by the detecting unit is the measurement position of the physical quantity.

Accordingly, it is possible to generate a measurement result image that displays accurately and clearly the measurement result of physical quantity and the identification mark that indicates the measurement position on the measurement position image that contains the measurement position of the physical quantity measured in a non-contact way.

The measurement system may further include a housing and a fixing instrument. The housing contains the image acquisition sensor. The fixing instrument fixes the physical quantity measuring device and the housing such that a direction of a measurement central axis indicating a measurement center of the physical quantity sensor and a direction of an optical axis of the image acquisition sensor are approximately in parallel.

Accordingly it is possible to prevent the position of the instruction light in the measurement position image from changing depending on the distance from the measurement system to the measurement position.

The image acquisition sensor may acquire a preview image. In this case, the detection unit detects whether or not the instruction light exists in the preview image, and if it is determined that the instruction light exists in the preview image, notifies that the measurement position image can be acquired.

Accordingly, it is possible to acquire the preview image as the measurement position image, when it is confirmed that the measurement position is surely contained in the preview image acquired by the image acquisition sensor.

The light source may emit light toward the measurement position as the instruction light. The light includes color visually distinguishable from the measurement position when emitted to the measurement position.

Accordingly, it is possible to accurately detect the position of the instruction light in the measurement value image because it is possible to more accurately recognize the instruction light in the measurement position image.

The light source may blink the instruction light.

Accordingly, it is possible to accurately detect the position of the instruction light in the measurement value image because it is possible to more accurately recognize the instruction light in the measurement position image.

The light source may emit a light having a specific shape as the instruction light. Accordingly, it is possible to accurately detect the position of the instruction light in the measurement value image because it is possible to more accurately recognize the instruction light in the measurement position image

The measurement system may further include an enlarged image generating unit. The enlarged image generating unit may generate an enlarged image by enlarging the measurement position image while keeping a position corresponding to the measurement position as a center.

The measurement result image generating unit may superimpose the measurement result and the identification mark on the enlarged image to generate the measurement result image.

Accordingly, even if the measurement position is far away from the measurement system, it is possible to acquire a detailed image around the measurement position as a measurement result image.

The measurement system may further include a camera shake detection sensor. The camera shake detection sensor detects camera shake of the image acquisition sensor. When the camera shake detection sensor detects the camera shake, the measurement result image generating unit is not generate the measurement result image.

Accordingly, it is possible to avoid generating a measurement result image that cannot accurately indicate the measurement potion because the measurement central axis is not fixed due to the camera shake.

The measurement system may further include a distance estimation unit. The distance estimation unit estimates a distance to the measurement position based on size and shape of the instruction light in the measurement position image.

Accordingly, it is possible to accurately estimate a distance from the measurement system to the measurement position.

The measurement system may further include a similarity determining unit. The similarity determining unit determines the degree of similarity between measurement result images based on a common feature existing in each of the measurement result images.

Accordingly, it is possible to classify each of the measurement result images by degree of similarity.

The measurement system may further include a first monitoring unit. The first monitoring unit may monitor whether or not an image indicating abnormality is contained in the measurement result image, the measurement position image, and/or the preview image.

Accordingly, it is possible to detect whether or not visual abnormality occurs around the measurement position.

The measurement system may further include a second monitoring unit. The second monitoring unit monitors whether or not physical quantity measured by the physical quantity sensor shows abnormality.

Accordingly, it is possible to detect whether or not abnormality occurs in the physical quantity at the measurement position.

The measurement system may further include a position identifying unit. The position identifying unit identifies a position where the measurement position image is acquired.

Accordingly, it is possible to identify a position where the measurement position image and the physical quantity are acquired.

A measurement device according to another aspect of the present invention includes a physical quantity sensor, a light source, an image acquisition sensor, a detection unit, and a measurement result image generating unit. The physical quantity sensor measures physical quantity at a certain measurement position in a non-contact way. The light source emits an instruction light toward the measurement position. The image acquisition sensor acquires a measurement position image containing the measurement position.

The detection unit detects a position where the instruction light exists in the measurement position image to detect a position corresponding to the measurement position in the measurement position image. The measurement result image generating unit generates a measurement result image by superimposing, on the measurement position image, the measurement result of physical quantity measured by the physical quantity sensor and the identification mark indicating that position detected by the detection unit is the measurement position of the physical quantity.

Accordingly, it is possible to generate a measurement result image that displays accurately and clearly the measurement result of physical quantity and the identification mark that indicates the measurement position on the measurement position image that contains the measurement position of the physical quantity measured in a non-contact way.

A measurement method according to another aspect of the present invention includes:
measuring physical quantity at a certain measurement position in a non-contact way;
emitting an instruction light toward the measurement position;
acquiring a measurement position image containing the measurement position;
detecting a position where the instruction light exists in the measurement position image to detect a position corresponding to the measurement position in the measurement position image; and
generating a measurement result image by superimposing, on the measurement position image, the measurement result of physical quantity measured by the physical quantity sensor in a non-contact way and an identification mark indicating that the position detected by the detection unit is the measurement position of the physical quantity.

Accordingly, it is possible to generate a measurement result image that displays accurately and clearly the measurement result of physical quantity and the identification mark that indicates the measurement position on the measurement position image that contains the measurement position of the physical quantity measured in a non-contact way.

### ADVANTAGEOUS EFFECTS

It is possible to generate a highly reliable measurement result image that accurately and clearly displays the measurement result of physical quantity and the identification mark indicating the measurement position of the physical quantity on a measurement positioning image containing the measurement position of the physical quantity measured in a non-contact way.

### BRIEF DESCRIPTION OF DRAWINGS

FIG. 1 is a figure showing the whole structure of a measurement system according to the first embodiment.
FIG. 2 is a figure showing the structure of a radiation thermometer.
FIG. 3 is a figure showing the structure of a portable terminal.
FIG. 4 is a figure showing functional blocks of the portable terminal.
FIG. 5 is a flow chart showing the temperature measurement operating by the measurement system according to the first embodiment.
FIG. 6 is a figure showing one example of measurement result images displayed in the portable terminal.
FIG. 7 is a figure showing a measurement system according to the second embodiment.
FIG. 8 is a figure showing the structure of the measurement device according to the third embodiment.

### DESCRIPTION OF EMBODIMENTS

### 1. First Embodiment

### (1) Outline of the Measurement System According to the First Embodiment

Below, a measurement system 100 configured to measure physical quantity according to the first embodiment will be described. The measurement system 100 according to the first embodiment is a system that measures temperature (one example of "physical quantity") of a surface of an object in a non-contact way, and acquires an image containing the surface of the object on which the temperature was measured (called "a measurement position image" hereinafter).

The measurement system 100 is a system that superimposes the temperature measurement result of the surface of the object (temperature value) and an identification mark (one example of "identification mark") that indicates a position at which the temperature is measured on the surface of the object on the measurement position image containing the surface of the object at which the temperature was measured, thereby generating a new image (called "a measurement result image "RI" hereinafter), and the image will be displayed and/or recorded.

### (2) The Structure of the Measurement System According to the First Embodiment

### (2-1) Whole Structure

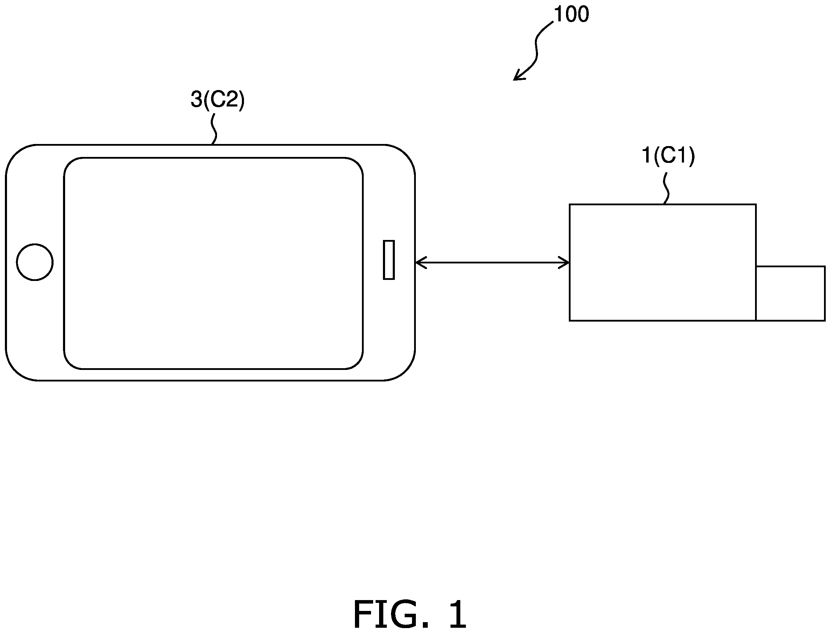

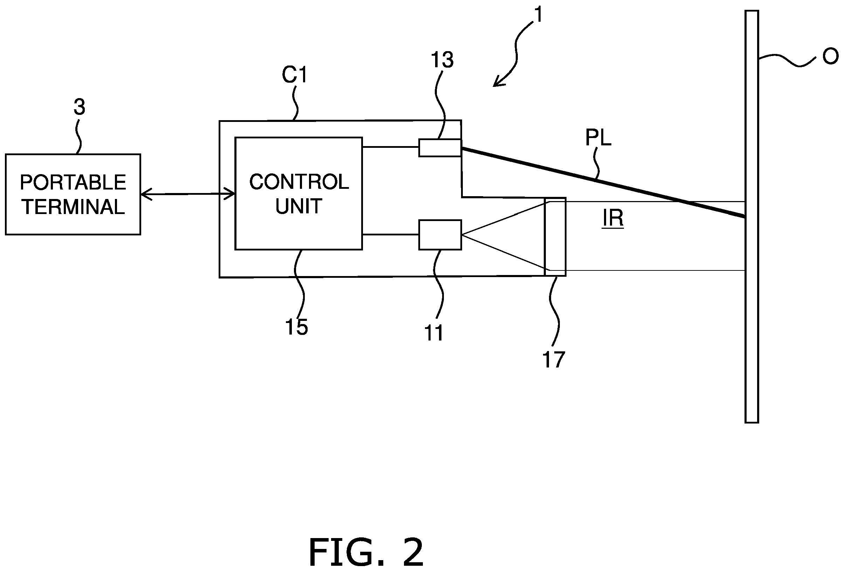

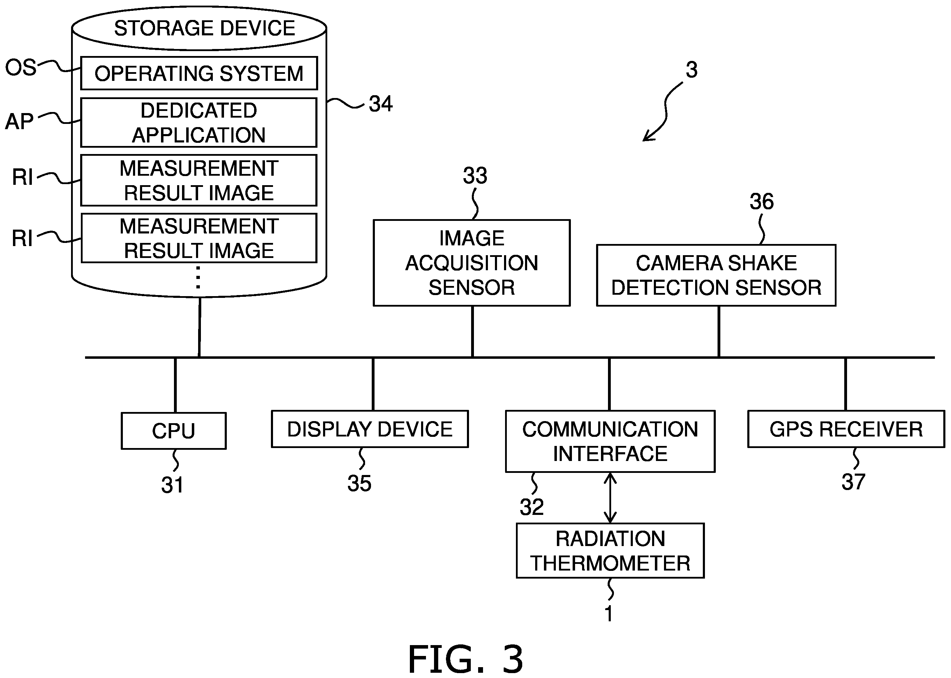

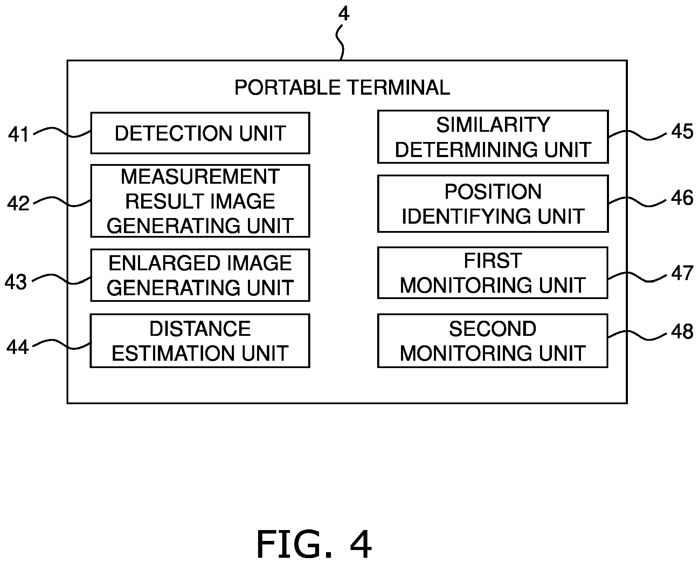

Below, referring to FIG. 1 through FIG. 4, the structure of the measurement system 100 according to the first embodiment will be described. FIG. 1 is a figure showing a whole structure of a measurement system according to the first embodiment. FIG. 2 is a figure showing a structure of a radiation thermometer. FIG. 3 is a figure showing a structure of a portable terminal. FIG. 4 is a figure showing functional blocks of the portable terminal.

First, referring to FIG. 1, the whole structure of the measurement system 100 will be described. As shown in FIG. 1, the measurement system 100 includes a radiation thermometer 1 (one example of "physical quantity measuring device") and a portable terminal 3.

The radiation thermometer 1 is an instrument that is configured to measure temperature of a surface of an object O based on intensity of infrared rays IR (FIG. 2) emitted from the surface of the object O (FIG. 2) in a non-contact way.

The portable terminal 3 can communicate with the radiation thermometer 1, and receives the temperature measurement result of the object O that was measured by the radiation thermometer 1. The portable terminal 3 is a terminal that acquires the measurement position image containing the position of the object O whose temperature was measured by the radiation thermometer 1, and superimposes, on the measurement position image, the temperature measurement value of the surface of the object O measured by the radiation thermometer 1, and an identification mark indicating the temperature measurement position in the measurement position image, to generate and display a measurement result image RI. The portable terminal 3 is a handy portable terminal such as a smartphone and a tablet, for example.

It should be noted that, in the measurement system 100 according to the first embodiment, the radiation thermometer 1 and the portable terminal 3 are not fixed to each other, the radiation thermometer 1 and the portable terminal 3 can move independently.

### (2-2) Radiation Thermometer

Next, referring to FIG. 2, one example of the concrete structure of the radiation thermometer 1 included in the measurement system 100 will be described. As shown in FIG. 2, the radiation thermometer 1 includes an infrared sensor 11 (one example of "physical quantity sensor"), a light source 13, and a control unit 15. These components of the radiation thermometer 1 are contained in a first housing C1.

The infrared sensor 11 receives the infrared ray IR emitted from a certain area of the object O, and outputs signals based on intensity of the infrared ray IR. The infrared sensor 11 is a thermopile sensor, for example. The infrared ray IR is focused by a lens 17 and is received by a light receiving surface of the infrared sensor 11.

The light source 13 emits an instruction light PL to the certain area of the object O that radiates the infrared ray IR received by the infrared sensor 11. It is preferable that the light source 13 outputs highly directive light as an instruction light PL. Since the highly directive instruction light PL is reflected by the object O, keeping its spot diameter small, it is easy to identify the reflecting position of the instruction light PL on the object O. In other words, the highly directive instruction light PL can accurately indicate the position of the object O.

The light source 13 may be a laser light source or an LED, for example.

In addition, the light source 13 emits, as an instruction light PL, light having color that can be visually distinguishable when the light is emitted on a certain area of the object O. For example, the light source 13 emits red light as an instruction light PL. Accordingly, it is possible to clearly distinguish the instruction light PL from the certain area of the object O when the certain area of the object O has a white-based color, for example.

Alternatively, when the certain area of the object O has a black based color, and the light source 13 emits white light as the instruction light PL, it is easy to distinguish the instruction light PL from the certain area of the object O.

The light source 13 may emit the instruction light PL in such a way that the instruction light PL can be clearly recognized on the surface of the object O.

As one example, the light source 13 can blink the instruction light PL at a predetermined frequency. Blinking the instruction light PL at the predetermined frequency makes it possible to clearly distinguish "stain" on the surface of the object O from the spot of the instruction light PL.

In this case, the control unit 15 may transmit signals that the light source 13 blinks the instruction light PL (pulse signals, for example) or signals similar to them (signals indicating blinking start timing and blinking cycle) to the portable terminal 3.

Accordingly, the portable terminal 3 compares the blinking cycle of the specific image existing in a preview image video (described later) and the blinking cycle of the instruction light PL, for example, to accurately determine whether or not the specific image in the preview image is a figure of the instruction light PL.

Alternatively, the light source 13 can emit the instruction light PL as a light having a specific shape. Specifically, the light source 13 can emit the instruction light PL such that the spot of the instruction light PL becomes a specific shape on the surface of the object O. The specific shape of the instruction light PL includes circle, cruciform, and triangle, for example. This allows users to clearly distinguish "stain" having a complexed shape on the surface of the object O from the spot of the instruction light PL.

For example, the instruction light PL having the specific shape can be emitted by locating a mask having a specific shape at a part where the instruction light PL is output, or by rapidly changing the emitting direction of the instruction light PL, for example.

In the radiation thermometer 1, all or part of special light emitting functionalities of the instruction light PL described above may be incorporated. In this case, by the control of the control unit 15, these light emitting functionalities may be switched, or multiple functionalities may be combined. For example, an instruction light PL having a specific shape may be blinked.

The control unit 15 is a computer system that includes a CPU, a storage device (such as ROM, and RAM), and various interfaces. The control unit 15 includes wired and/or wireless interfaces configured to communicate with the portable terminal 3, such as Ethernet (registered trademark) interface, wireless LAN interface, short-range communication interface (Bluetooth (registered trademark) interface, for example), infrared communication interface, RF communication interface, and USB interface.

The control unit 15 executes software stored in the storage device of the computer system to achieve the following functions of the control unit 15.

The control unit 15 may be constructed by SoC (System on Chip) to achieve the following functions by hardware.

The control unit 15 has a function of controlling each unit (such as the infrared sensor 11 and the light source 13) of the radiation thermometer 1. The control unit 15 has a function of converting signals (analog signals, for example) indicating intensity of the infrared ray IR inputted from the infrared sensor 11 to proper signals (digital signals, for example) and to transmit them to the portable terminal 3.

In addition, the control unit 15 has a function of controlling each unit of the radiation thermometer 1 according to instructions sent from the portable terminal 3.

### (2-3) The Physical Construction of the Portable Terminal

Below, the structure of the portable terminal 3 in the measurement system 100 will be described. First, referring to FIG. 3, the physical structure of the portable terminal will be described.

As shown in FIG. 3, the portable terminal 3 mainly includes a CPU 31, a communication interface 32, an image acquisition sensor 33, a storage device 34, and a display device 35. These physical components of the portable terminal 3 are contained in a second housing C2 (FIG. 1).

The CPU 31 executes various processing to achieve the various functions (described later) of the portable terminal 3. The CPU 31 executes a dedicated application AP stored in the storage device 34 on the operating system OS to achieve the various functions of the portable terminal 3.

The communication interface 32 is an interface configured to communicate with external devices such as the radiation thermometer 1 by control of the CPU 31.

When communicating with the external devices using a wired interface, the communication interface 32 is Ethernet (registered trademark) interface, or USB interface, for example.

In contrast, when communicating with the external devices using a wireless interface, the communication interface 32 is a wireless LAN interface, a short-range communication interface such as Bluetooth (registered trademark), an infrared communication interface, and an RF communication interface, for example.

In this embodiment, the communication interface 32 includes a wired interface configured to communicate with the external devices and a wireless interface configured to communicate with the external devices.

The image acquisition sensor 33 is a sensor that acquires an external scene as an image by control of the CPU 31. The image acquisition sensor 33 is a CCD image sensor having charge coupled devices (CCD) arranged in a two-dimensional array, or a CMOS image sensor having photodetection elements arranged in an array, for example.

The storage device 34 is a device including ROM, RAM, SSD, or HDD to store data. The storage device 34 stores the operating system OS and the dedicated applications AP. The CPU 31 accesses the operating system OS and the dedicated applications AP stored in the storage device 34 to execute the various information processing instructed by the dedicated application AP.

The dedicated applications AP is downloaded from a certain server (an application providing server, for example) with a special password, installed to the portable terminal 3, and stored in the storage device 34.

The display device 35 is a device including a display such as an liquid crystal display, an organic EL display, and a touch panel disposed on the display. The display device 35 displays the images acquired by image acquisition sensor 33 according to the control of the CPU 31.

The display device 35 displays GUI (Graphical User Interface) for operating the dedicated application AP and detects a touch on the touch panel.

The portable terminal 3 in this embodiment may further include a camera shake detection sensor 36, in addition to the previous basic structures. The camera shake detection sensor 36 is a gyro sensor that measures changes (angular velocity) of a tilt angle of the portable terminal 3, for example.

The camera shake detection sensor 36 makes it possible to detect "camera shake" of the portable terminal 3, i.e., fluctuation of the optical axis of the image acquisition sensor 33. The optical axis of the image acquisition sensor 33 is an axis parallel to a normal line of a light receiving surface of the image acquisition sensor 33.

The portable terminal 3 may further include a GPS receiver 37. The GPS receiver 37 receives radio wave from the GPS satellites, and identifies a position of the portable terminal 3, based on distances between the GPS satellites and the portable terminal 3 that is calculated from the difference between the time when the radio wave is generated and the time when it is received.

By executing the dedicated application AP, the CPU 31 can acquire the position information of the portable terminal 3 identified by the GPS receiver 37, and display the position information by superimposing it onto the image acquired by the image acquisition sensor 33, and/or embed the position information into the image, with a special data format such as meta data.

The portable terminal 3 may include an input device such as a button and a sound generating device such as a speaker.

### (2-4) Functional Configuration of the Portable Terminal

Next, a functional configuration of the portable terminal 3, that are achieved by executing the dedicated application AP by the CPU 31, will be described, referring to the function block diagram of the portable terminal 3 shown in Fig. 4.

The portable terminal 3 mainly has functions achieved by a detection unit 41 and a measurement result image generating unit 42.

The detection unit 41 has a function of determining whether or not a figure of instruction light PL exists in the image acquired by the image acquisition sensor 33.

The detection unit 41 determines that the image including a figure of the instruction light PL as a measurement position image, and determines in which position (coordinates) in the measurement position image the instruction light PL exists. The detection unit 41 determines that the position in which the instruction light PL exists in the measurement position image as a position corresponding to a temperature measurement position in the measurement position image.

In this embodiment, the detection unit 41 acquires a preview image from the image acquisition sensor 33 at a predetermined cycle. The acquired preview image is displayed on the display device 35 at a predetermined cycle. Accordingly, the preview image acquired by the image acquisition sensor 33 can be displayed as a video.

The detection unit 41 determines whether or not the figure of the instruction light PL exists in each of the acquired preview images. If it is determined that the instruction light PL exists in the preview image, the detection unit 41 notifies the dedicated application AP of the determination.

Accordingly, if it is determined that the preview image acquired by the image acquisition sensor 33 includes the measurement position, it is possible to acquire that preview image as a measurement position image.

The measurement result image generating unit 42 superimposes the temperature measurement value measured by the radiation thermometer 1 and an identification mark that indicates that the position of measurement position detected by the detection unit 41 is equal to the temperature measurement position, on the measurement position image containing the figure of the instruction light PL (i.e., including the temperature measurement position), to generate the measurement result image RI.

The measurement result image generating unit 42 stores the generated measurement result image RI into the storage device 34 and/or displays it on the display device 35.

If the detection unit 41 acquires the preview image and displays it, the measurement result image generating unit 42 may generate the measurement result image RI by superimposing the temperature measurement value and the identification mark on each of the images acquired at a predetermined cycle, and instruct the detection unit 41 to successively display the measurement result images RI as preview images.

When the measurement position image is acquired, the measurement result image generating unit 42 may not generate measurement result image RI from the measurement position image acquired in the camera shake condition if the camera shake detection sensor 36 detects camera shake of the portable terminal 3.

Specifically, if angular velocity detected by the camera shake detection sensor 36 is higher or equal to the predetermined threshold, the measurement result image generating unit 42 stops generating the measurement result image RI.

When the angular velocity detected by the camera shake detection sensor 36 is higher or equal to the threshold, it means that the direction (angle) of an optical axis of the image acquisition sensor 33 considerably fluctuates. In this case, the angle defined by the instruction light PL and the optical axis of the image acquisition sensor 33 widely fluctuates, and it is difficult to properly identify the temperature measurement position in the measurement position image. In other words, the measurement result image RI generated from the measurement position image acquired under the camera shake conditions deteriorates admissibility of evidence.

Accordingly, since the measurement result image RI is not generated when the camera shake of the portable terminal 3 is detected, it is possible to generate the measurement result image RI having enhanced admissibility of evidence with a high probability.

Other than functions achieved by the detection unit 41 and the measurement result image generating unit 42, the portable terminal 3 may include each function unit achieving the following functions. The portable terminal 3 may include all or part of the following function units.

If all or a part of function units are included, for example, buttons for executing each function unit may be provided on GUI of the dedicated application AP, and the function unit is executed when a button is pressed. Alternatively, the option setting of dedicated application AP may switch enabling/disabling of each function unit.

Alternatively, the following function units may be executed by one dedicated application AP, or, several function units may be executed by an application different from the dedicated application AP.

The portable terminal 3 may include a function achieved by an enlarged image generating unit 43. The enlarged image generating unit 43 generates an enlarged image by enlarging the measurement position image, which is acquired by the image acquisition sensor 33 and includes the figure of the instruction light PL. The image is enlarged while keeping the center of the figure, i.e., a position corresponding to the temperature measurement position, as a center of the enlarged image. The enlarged image generating unit 43 generates the enlarged image by enlarging pixels contained in the measurement position image.

In this case, the measurement result image generating unit 42 superimposes the temperature measurement value and an identification mark indicating the temperature measurement position on the enlarged image generated by the enlarged image generating unit 43, to generate the measurement result image RI.

Accordingly, even if the temperature measurement position is far from the measurement system 100, in the measurement position image and the measurement result image RI, the enlarged figure of the instruction light PL can be clearly displayed, and a detailed image of the object O that is a measuring object around the measurement position can be displayed.

Accordingly, the function of the enlarged image generating unit 43 allows the portable terminal 3 to clearly display the instruction light PL and to generate the measurement result image RI displaying conditions around the displaying measurement position with enhanced admissibility of evidence (reliability).

The portable terminal 3 may include functions achieved by a distance estimation unit 44. The distance estimation unit 44 estimates a distance from the measurement system 100 to the measurement position based on a size and a shape of the instruction light PL in the measurement position image. Accordingly, the distance from the measurement system 100 to the temperature measurement position can be accurately measured.

Specifically, the distance estimation unit 44 uses specifications of the image acquisition sensor 33 such as the resolution and the angle of view contained in the portable terminal 3, and the number of pixels forming the figure of the instruction light PL in the measurement position image to calculate the distance from the measurement system 100 to the temperature measurement position.

For example, the dedicated application AP can acquire the specifications of the image acquisition sensor 33 by requesting it to the operating system OS.

The portable terminal 3 may include a function achieved by a similarity determining unit 45. The similarity determining unit 45 determines the degree of similarity between measurement result images RI, based on a common feature existing in each of the measurement result images RI stored in the storage device 34.

The similarity determining unit 45 extracts, from the images of objects contained in each of the measurement result images RI, their shape or color as the feature, and determines that common features are included in the measurement result images RI if the image having almost identical characteristics is included in both measurement result images RI.

Generally, the image including the same shape and color are often acquired at the same place. Accordingly, by the similarity determining unit 45 which determines that the measurement result images RI include the common characteristics, it is possible to classify the measurement result images RI according to degree of similarity such as classifying them into places where the image is acquired.

The portable terminal 3 may include a function achieved by a position identifying unit 46. The position identifying unit 46 identifies a position where the measurement position image has been acquired.

The position identifying unit 46 can identify information (latitude, longitude, for example) outputted from the GPS receiver 37 when the measurement position image is acquired as an acquired position of the measurement position image.

Alternatively, the position identifying unit 46 can identify an acquired position of the measurement position image from the position information embedded in the measurement position image.

Alternatively, the position identifying unit 46 can identify indoor positions identified by indoor positioning systems using Wi-Fi positioning, RFID (Radio Frequency Identifier) positioning, beacon positioning, indoor GPS (IMES) positioning as acquired positions of the measurement position image, for example.

In this case, the measurement result image generating unit 42 may further superimpose information about a position identified by the position identifying unit 46 on the measurement position image to generate the measurement result image RI. Accordingly, it is possible to visually confirm the place identified by the position identifying unit 46.

The portable terminal 3 may include not only an operation mode in which the measurement result image RI at a specific timing is displayed on the display device 35 and is stored into the storage device 34, but also include an operation mode in which temperature of a specific position of object O is always monitored, and the measurement result image RI including the specific position is always acquired (called "monitor mode").

In this case, the portable terminal 3 may include a function achieved by a first monitoring unit 47. The first monitoring unit 47 monitors whether or not an image indicating abnormality is contained in the measurement result image RI.

For example, if the measurement result images RI are continuously acquired and a measurement result image RI acquired during a specific period includes an image which does not exist during the other periods, e.g., an image of an animal crossing the temperature measurement position, exists, the first monitoring unit 47 can determine that an image indicating abnormality is contained in the measurement result image RI, and that the temperature measurement result in the period during which the above measurement result image RI is acquired is not the temperature of measurement position continuously monitored.

If the first monitoring unit 47 determines that the image indicating abnormality is contained in the measurement result image RI, the first monitoring unit 47 can generate an alarm by emitting sound from the portable terminal 3 or displaying abnormality occurrence on the display device 35 (measurement result image RI), for example.

Alternatively, if it is determined that the image indicating abnormality is contained in the measurement result image RI, the first monitoring unit 47 may store the measurement result image RI including the image indicating abnormality into the storage device 34 with a format distinguishable from other measurement result images RI. For example, a mark indicating abnormality is superimposed on the measurement result image RI, or the measurement result image RI is stored into the storage device 34 with a file name different from that of other measurement result images RI.

The first monitoring unit 47 may have a function of extracting motion vectors in the measurement position image or the preview image. If the measuring object is a stationary object, the motion vectors in the measurement position image can be assumed zero. Accordingly, if the motion vectors are continuously extracted and the amount of the motion vectors exceeds the threshold, the measurement result image generating unit 42 stops generating the measurement result image RI.

The measurement position image and the preview image are images on which the temperature measurement results are not superimposed. Accordingly, by extracting motion vectors using the measurement position image or the preview image, it is possible to suppress misdetection such that the movement is detected when the display of the temperature measurement result changes, for example. In addition, the determination whether or not the extracted motion vector is caused by the change of the display of the measurement result, and the process to eliminate the motion vector caused by the change of the display of the measurement result, are not needed.

Alternatively, if the monitor mode exists, the portable terminal 3 may have a function achieved by a second monitoring unit 48. The second monitoring unit 48 monitors whether or not the temperature measured by the radiation thermometer 1 indicates abnormality.

For example, if the temperature measured by the radiation thermometer 1 fluctuates beyond the predetermined permissible range, the second monitoring unit 48 can notify that the temperature fluctuation contains abnormality, through the communication interface 32, external systems, terminals possessed by users, or cloud network.

Alternatively, if it is determined that the temperature fluctuation includes abnormality, the second monitoring unit 48, can generate alarm, such as generating a sound from the portable terminal 3, or displaying a notice notifying the occurrence of the abnormality on the display device 35 (measurement result image RI), for example.

Alternatively, if it is determined that the temperature fluctuation is abnormal, the second monitoring unit 48 may store the measurement result image RI that was generated at a timing when the temperature fluctuation was abnormal, into the storage device 34 with a format distinguishable from other measurement result images RI.

### (3) The Operation of the Measurement System

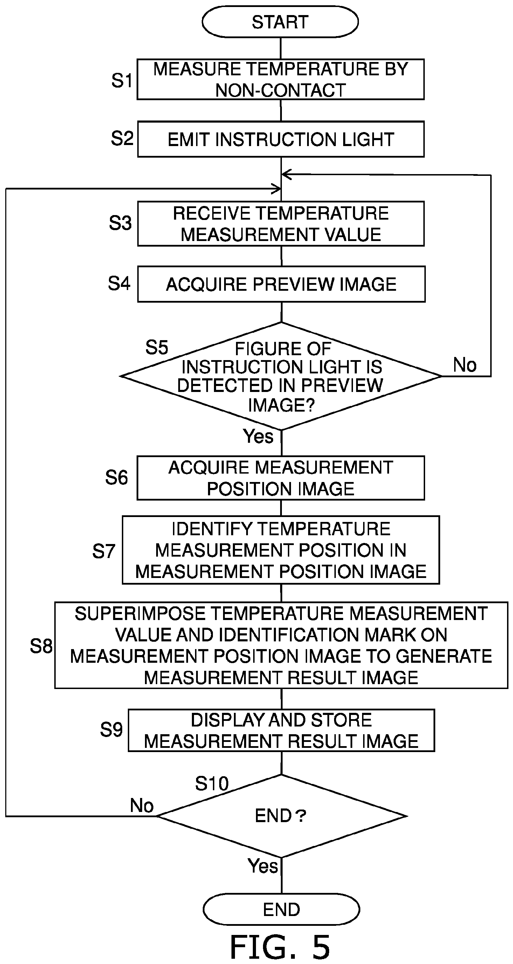

Referring to FIG. 5, a basic operation of measuring temperature at a certain area of the object O, and displaying and storing the measurement result image using the measurement system 100 having the previously described structures, will be described below. FIG. 5 is a flowchart showing temperature measurement operation by the measurement system according to the first embodiment.

When the measurement system 100 starts the operation, the radiation thermometer 1 first starts measuring the temperature of a certain area of the object O.

Specifically, at step S1, the infrared sensor 11 receives the infrared ray IR generated from the area of the object O, and outputs a signal indicating the intensity of the infrared ray IR to the control unit 15. The control unit 15 converts the intensity of the received infrared ray IR to the temperature measurement value of the area of the object O and transmits it to the portable terminal 3.

At step S2, the light source 13 irradiates the area of the object O with the instruction light PL.

Next, when the dedicated application AP is executed, at step S3, the portable terminal 3 receives temperature measurement value transmitted from the radiation thermometer 1 by the communication interface 32.

At step S4, the image acquisition sensor 33 acquires an image of a scene in a direction at which the portable terminal 3 is oriented, as a preview image. After that, the received temperature measurement value is superimposed on the acquired preview image and displayed on the display device 35.

After acquiring the preview image, at step S5, the detection unit 41 determines whether or not the figure of the instruction light PL is detected in the preview image. In other words, it is determined whether or not the instruction light PL exists in the preview image.

Specifically, if pixels having a color that is the same or extremely close to that of the instruction light PL is concentrated at a specific position, and with the number and arrangement corresponding to size and shape of the instruction light PL in the preview image, the detection unit 41 determines that the figure of the instruction light PL is detected at the specific position in the preview image.

If the spot of the instruction light PL is small, the detection unit 41 may enlarge the preview image and determine whether or not the figure of the instruction light PL is detected in the preview image.

If the figure of instruction light PL is not detected in the preview image ("No" at step S5), the process goes back to step S3 again, and the reception of temperature measurement value and the acquisition of the preview image are repeatedly operated at a predetermined cycle.

During this time, the user of the measurement system 100 attempts to locate the spot of the instruction light PL in the preview image by changing the orientation of the image acquisition sensor 33 (camera) of the portable terminal 3.

If the figure of the instruction light PL is not detected in the preview image, the steps S3 through S5 are repeatedly operated at a predetermined cycle until the figure of the instruction light PL is detected. Accordingly, the preview image is displayed on the display device 35 as a video.

In contrast, if the figure of instruction light PL is detected in the preview image ("Yes" at step S5), the detection unit 41 notifies the dedicated application AP that it is possible to acquire the measurement position image including the temperature measurement position. The dedicated application AP that has received the notification instructs the image acquisition sensor 33 to acquire the measurement position image at step S6.

For example, after receiving the notification that the measurement position image can be acquired, the dedicated application AP causes the GUI of the dedicated application AP to display that the measurement position image can be acquired. For example, an icon or character information is displayed on the GUI, and/or the image acquiring button of the GUI is activated.

After that, if the user press (touch) an image acquiring button of the GUI of the dedicated application AP, the current preview image is acquired as the measurement position image.

Alternatively, the dedicated application AP may automatically acquire the measurement position image form the image acquisition sensor 33 when it receives the notification that the measurement position image can be acquired.

After acquiring the measurement position image, the detection unit 41, at step S7, identifies a position where the figure of the instruction light PL exists in the measurement position image, as a temperature measurement position in this measurement position image.

If pixels having a color that is the same or extremely close to that of the instruction light PL in the measurement position image are concentrated at specific positions, with the number and arrangement corresponding to size and shape of the instruction light PL, the detection unit 41 determines that the above specific position is the temperature measurement position in the measurement position image.

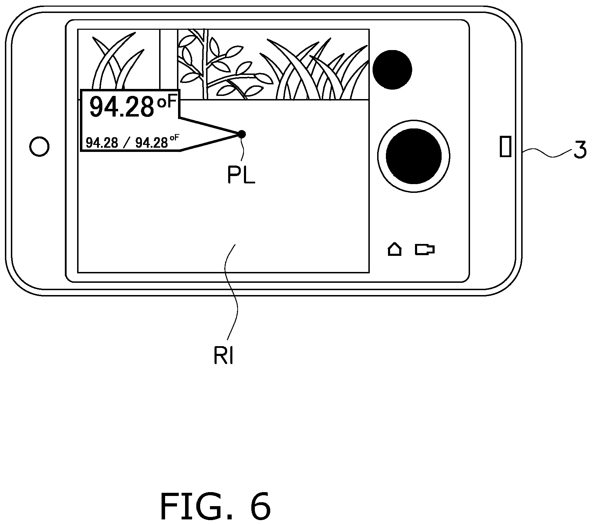

After determining the temperature measurement position in the measurement position image, at step S8, the measurement result image generating unit 42 superimposes, on the measurement position image acquired at step S6, the temperature measurement value and the identification mark indicating the temperature measurement position in the measurement position image to generate the measurement result image RI. At step S8, the measurement result image generating unit 42 generates, for example, the measurement result image RI as shown in FIG.6. FIG. 6 is a figure showing one example of the measurement result images displayed in the portable terminals.

In the measurement result image RI shown in FIG. 6, a speech balloon indicating a position where the instruction light PL exists is displayed as an identification mark indicating the temperature measurement position, and the temperature measurement value measured at the measurement position is displayed in the speech balloon (94.28 degrees Fahrenheit in FIG. 6).

The measurement result image generating unit 42 may superimpose, other than the temperature measurement value, acquiring date and time of the measurement position image (i.e., temperature measurement day and time), acquired position of measurement position image, or an acquirer of the measurement position image, on the measurement position image for display. Accordingly, the measurement result image RI with high admissibility of evidence can be acquired.

After the measurement result image RI is generated, the measurement result image generating unit 42, at step S9, causes the display device 35 to display the generated measurement result image RI. After receiving a user instruction to store the measurement result image RI through GUI of dedicated application AP, the measurement result image generating unit 42 stores the measurement result image RI in the storage device 34.

After the measurement result image RI is generated and displayed, the measurement of temperature and the acquisition of the measurement result image RI are continued ("No" at step S10), the above-described steps S3 through S9 are executed again.

In contrast, if the measurement of temperature and acquisition of the measurement result image RI are stopped ("Yes" at step S10), the measurement system 100 stops measuring the temperature.

### (4) Summary

As described above, according to the measurement system 100 of the first embodiment, when the temperature measurement value is superimposed on the measurement position image that displays the temperature measurement position and its vicinity, an identification mark, which indicates the existent position of the figure of the instruction light PL indicating the temperature measurement position, i.e., temperature measurement position, is displayed in the measurement position image.

Accordingly, even if the spot of the instruction light PL is too small to clearly recognize the existent position of the spot of the instruction light PL in the measurement result image RI at a glance, it is possible to clearly recognize the temperature measurement position in the measurement position image at a glance, for example. In other words, it is possible to acquire the measurement result image RI with enhanced admissibility of evidence.

According to the measurement system 100 of the first embodiment, the image processing of the measurement position image enables to identify the existent position of the figure of the instruction light PL, and to identify the identified position as a temperature measurement position in the measurement position image. Accordingly, even if the angle of the optical axis of the image acquisition sensor 33 against the optical axis of instruction light PL has any value, it is possible to precisely identify the existent position of the figure of the instruction light PL, i.e., it is possible to accurately identify the temperature measurement position. Below, the benefits described above will be described in more detail.

For example, if the optical axis of the instruction light PL and the optical axis of the image acquisition sensor 33 are not in parallel, i.e., they define a certain angle, the position of the figure of the instruction light PL in the image acquired by the image acquisition sensor 33 changes depending on the distance from the measurement system 100 to the temperature measurement position.

In addition, since the image acquisition sensor 33 has a certain angle of view, the position change of the figure of the instruction light PL, which is caused by the fact that the optical axis of the instruction light PL and the optical axis of the image acquisition sensor 33 are not in parallel, becomes more prominent. Accordingly, the existent position of the figure of the instruction light PL in the measurement position image, i.e., the temperature measurement position cannot be determined unambiguously.

Accordingly, if the figure of the instruction light PL in the measurement position image cannot be clearly identified, i.e., the measurement system 100 and the temperature measurement position are apart and therefore the size and shape of instruction light PL become small, the temperature measurement position in the measurement position image cannot be accurately identified.

Therefore, as described above, in the first embodiment, the image processing of measurement position image enables to detect the position of the figure of the instruction light PL. Accordingly, whether or not the optical axis of instruction light PL and the optical axis of the image acquisition sensor 33 are in parallel, and/or whether or not the instruction light PL in the measurement position image cannot be clearly identified, it is possible to accurately identify the existent position of the image of the instruction light PL in the measurement position image, i.e., the temperature measurement position.

### 2. Second Embodiment

In the above-described measurement system 100 according to the first embodiment, the radiation thermometer 1 and the portable terminal 3 are not fixed with each other, and therefore the positional relationship between the radiation thermometer 1 and the portable terminal 3 may fluctuate.

In a measurement system 200 of the second embodiment described below, the positional relationship between the radiation thermometer 1 and the portable terminal 3 are fixed.

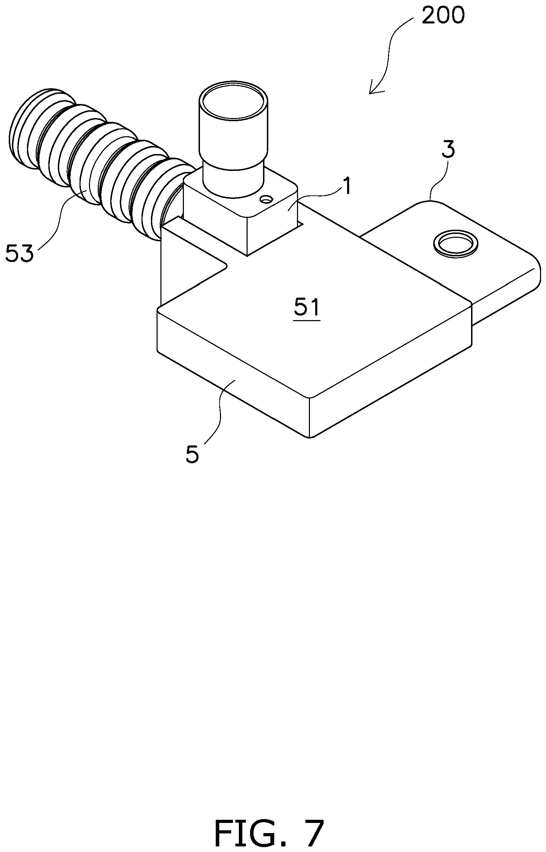

Specifically, as shown in FIG. 7, the measurement system 200 according to the second embodiment includes a fixing instrument 5. FIG. 7 is a figure showing the structure of the measurement system according to the second embodiment.

The fixing instrument 5 is an instrument that fixes the first housing C1 of the radiation thermometer 1 and the second housing C2 of the portable terminal 3 to a predetermined position. The fixing instrument 5 fixes the first housing C1 onto the first primary surface 51 such that a normal line of the first primary surface 51 and a measurement central axis indicating the measurement center of the infrared sensor 11 are in parallel.

The fixing instrument 5 fixes the second housing C2 into a groove formed in a primary surface opposite to the first primary surface 51 such that the image acquisition sensor 33 (camera) is not shielded by the first primary surface 51. Accordingly, the normal line of the first primary surface 51 and the optical axis of the image acquisition sensor 33 are in parallel.

In other words, the fixing instrument 5 fixes the radiation thermometer 1 and the portable terminal 3 such that the direction of the measurement central axis indicating the measurement center of the infrared sensor 11 and the direction of the optical axis of the image acquisition sensor 33 are substantially in parallel.

Accordingly, it is possible to suppress the fluctuation of the existent position of the figure of the instruction light PL in the measurement position image, depending on the distance from the measurement system 200 to the temperature measurement position.

As shown in FIG. 7, the fixing instrument 5 is provided with a handle 53 below the fixed position of the radiation thermometer 1. The user of the measurement system 200 can easily change the direction of the measurement system 200 by holding the handle 53 when using the measurement system 200.

Alternatively, the fixing instrument 5 may be provided with a USB interface that connects the portable terminal 3 and the radiation thermometer 1 by wire. Specifically, a first connector (a convex portion) is provided at the fixing instrument 5 that engages with a connecting port (a concave portion) of the USB interface provided in the portable terminal 3. By sliding the portable terminal along a primary surface opposite to the first primary surface 51, the connecting port of the portable terminal 3 and the first connector are connected.

As well as the above, a second connecter is provided that engages with a connecting port of the radiation thermometer 1, and the connecting port of the radiation thermometer 1 is engaged with the second connector. The first connector and the second connector connected with each other by a cable of the USB interface embedded in the fixing instrument 5. Accordingly, by just connecting with the connector, the portable terminal 3 and the radiation thermometer 1 can be fixed to the fixing instrument 5, and they can be connected immediately by wire.

It should be noted that the measurement system 200 according to the second embodiment includes the structures and functions similar to those of the measurement system 100 according to the first embodiment, except for further including the fixing instrument 5. Accordingly, in this section, the structures and functions of the measurement system 200 according to the first embodiment, other than the fixing instrument 5, are not described here.

In addition, as described above, same as in the first embodiment, in the measurement system 200 according to the second embodiment, the image processing of the measurement position image enables to detect the position of the figure of the instruction light PL. Accordingly, in the second embodiment, it is not necessary to calibrate the optical axis of measurement system 200 for the fixing instruments 5.

The reason is that, since the image processing of the measurement position image enables to detect the position of the figure of the instruction light PL, even if the direction of the measurement central axis of the infrared sensor 11 and the direction of the optical axis of the image acquisition sensor 33 vary depending on each of the fixing instruments 5, it is possible to accurately identify the existent position of the figure of the instruction light PL in the measurement position image, regardless of the difference between these two axes .

### 3. Third Embodiment

In the measurement systems 100, 200 according to the first and second embodiments described above, a device (the radiation thermometer 1) that measures temperature in a non-contact way and a device (the portable terminal 3) that acquires an image of the temperature measurement position are separate devices.

A measurement device 300 according to the third embodiment described below integrally includes a function of the temperature measurement in a non-contact way and a function of acquisition of the image of the temperature measurement position.

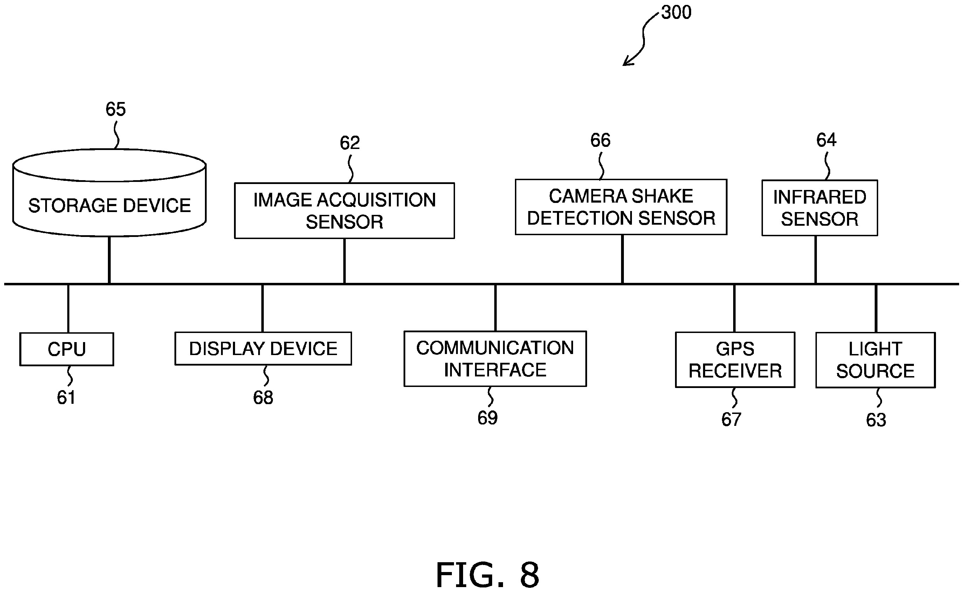

Specifically, as shown in FIG. 8, the measurement device 300 according to the third embodiment further includes a light source 63 that emits the instruction light PL toward the temperature measurement position, and an infrared sensor 64 that measures temperature in a non-contact way, in addition to the CPU 61 and the image acquisition sensor 62. FIG. 8 is a figure showing the structure of the measurement device according to the third embodiment.

The measurement device 300 includes a storage device 65, a camera shake detection sensor 66, a GPS receiver 67, a display device 68, and a communication interface 69, as necessary.

By incorporating the function of temperature measurement in a non-contact way and the function of acquisition of the image of the temperature measurement position into one device, the optical axis of instruction light PL (measurement central axis of the infrared sensor 64) and the optical axis of the image acquisition sensor 62 are fixed. Accordingly, it is possible to suppress the fluctuation of the existent position of the figure of the instruction light PL in the measurement position image depending on the distance from the measurement device 300 to the temperature measurement position.

The structures and functions of the CPU 61, the image acquisition sensor 62, the light source 63, the infrared sensor 64, the storage device 65, the camera shake detection sensor 66, the GPS receiver 67, the display device 68, and the communication interface 69 of the measurement device 300 according to the third embodiment is not described here because they are similar to the structures and functions of the CPU 31, the image acquisition sensor 33, the light source 13, the infrared sensor 11, the storage device 34, the camera shake detection sensor 36, the GPS receiver 37, the display device 35, and the communication interface 32 of the measurement system 100 according to the first embodiment.

Functions achieved by executing the dedicated application AP in the measurement device 300 is not described here because they are similar to functions achieved by the measurement system 100 according to the first embodiment.

In the measurement device 300 according to the third embodiment, same as in the first embodiment, the image processing of the measurement position image enables to detect the position of the figure of the instruction light PL. Accordingly, it is not necessary to calibrate the optical axis for the measurement device 300 in the third embodiment.

The reason is that since the image processing of the measurement position image enables to detect the position of the figure of the instruction light PL, even if the direction of measurement central axis of the infrared sensor 64 and the direction of the optical axis of the image acquisition sensor 62 vary depending on each of the measurement devices 300, it is possible to accurately identify the existent position of the figure of the instruction light PL in the measurement position image, regardless of the directional difference between these two axes.

### 4. Other Embodiments

Multiple embodiments of the present invention were described above, but the present invention is not limited to these embodiments, and various modifications are possible within a scope that does not depart from the invention. In particular, the embodiments and modified examples written in the present specification can be arbitrarily combined as needed.

(A) The processes and/or the order of processes of steps in the flowchart shown in FIG. 5 may be changed within the scope of the present invention. For example, in the measurement system 100 according to the first embodiment and the measurement system 200 according to the second embodiment, in order to reduce the amount of data transmitted between the radiation thermometer 1 and the portable terminal 3, it may not be necessary to send and receive the temperature measurement value each time the preview image is acquired. For example, the temperature measurement value may be sent and received when the measurement position image is acquired.

In the measurement system 200 according to the second embodiment and the measurement device 300 according to the third embodiment, in which the optical axis of the instruction light PL and the optical axis of the image acquisition sensor 33, 62 are fixed, a process of determining whether or not the figure of the instruction light PL exists in the preview image may be omitted. The reason is that if the optical axis of the instruction light PL and the optical axes of the image acquisition sensor 33, 62 are fixed, the preview image always contains the figure of the instruction light PL.

(B) In the first through third embodiments, the physical quantity measured in a non-contact way is temperature. However, the physical quantity is not limited to it. In the first through third embodiments, the physical quantity measured in a non-contact way may be distortion, (inner) stress, humidity at a certain position of the object O, reflection coefficient, gloss, color, surface roughness on the surface of the object O.

(C) In the first through third embodiment, one instruction light PL emitted from one light source 13 indicates a measurement position. However, the present invention is not limited to these embodiments. For example, multiple instruction lights emitted from the different light sources may indicate a measurement position. In this case, a position between the two instruction lights can be identified as a measurement position, for example. Alternatively, an inner area surrounded by the multiple instruction lights may be identified as a measurement position.

In a case that the multiple instruction lights indicate measurement positions, the existent positions of the plurality of instruction lights in the measurement position image can be identified by the previously described image processing of the measurement position image.

(D) The emission of the instruction light PL may be controlled by the portable terminal 3. For example, if a button displayed on the GUI of the dedicated application AP in the portable terminal 3 is pushed, the instruction light PL may start the emission.

(E) The image acquisition sensor 33 may include a function of detecting motion vectors of an object contained in these images when acquiring the measurement position image and the preview image.

(F) The detection of the camera shake of the portable terminal 3 may be performed by detecting the motion vectors using the measurement position image or the preview image. For example, if the length of the motion vector per unit time is longer than a predetermined length, it can be determined that the camera shake of the portable terminal 3 occurs.

### INDUSTRIAL APPLICABILITY

The present invention can be widely applied to a system and a device that measures physical quantity at a remote measurement position in a non-contact way, acquires an image containing the measurement position, and superimposes the measurement result of physical quantity on the image for display.

### REFERENCE SIGNS LIST

- 100, 200: measurement system
- 300: measurement device
- 1: radiation thermometer
- C1: first housing
- 11: infrared sensor
- 13: light source
- 15: control unit
- 17: lens
- 3: portable terminal
- C2: second housing
- 31: CPU
- 32: communication interface
- 33: image acquisition sensor
- 34: storage device
- 35: display device
- 36: camera shake detection sensor
- 37: GPS receiver
- 41: detection unit
- 42: measurement result image generating unit
- 43: enlarged image generating unit
- 44: distance estimation unit
- 45: similarity determining unit
- 46: position identifying unit
- 47: first monitoring unit
- 48: second monitoring unit
- 5: fixing instrument
- 51: first primary surface
- 53: handle
- 61: CPU
- 62: image acquisition sensor
- 63: light source
- 64: infrared sensor
- 65: storage device
- 66: camera shake detection sensor
- 67: GPS receiver
- 68: display device
- 69: communication interface
- AP: purpose-built application
- IR: infrared ray
- O: object
- OS: operating system
- PL: instruction light
- RI: measurement result image

## Claims

1. A measurement system comprising:
a physical quantity measurement device including a physical quantity sensor configured to detect physical quantity at a measurement position in a non-contact way, and a light source configured to emit an instruction light toward the measurement position;
an image acquisition sensor configured to acquire a measurement position image including the measurement position;
a detecting unit configured to detect a position where the instruction light exists in the measurement position image to detect a position corresponding to the measurement position in the measurement position image; and
a measurement result image generation unit configured to generate a measurement result image by superimposing, on the measurement position image, the measurement result of physical quantity measured by the physical quantity sensor and an identification mark indicating that the position detected by the detecting unit is the measurement position of the physical quantity.

2. The measurement system according to claim 1, further comprising:
a housing that contains the image acquisition sensor; and
a fixing instrument configured to fix the physical quantity measuring device and the housing such that a direction of a measurement central axis indicating a measurement center of the physical quantity sensor and a direction of an optical axis of the image acquisition sensor are approximately in parallel.

3. The measurement system according to claim 1 or 2, wherein
the image acquisition sensor acquires a preview image, and
the detection unit detects whether or not the instruction light exists in the preview image, and if it is determined that the instruction light exists in the preview image, notifies that the measurement position image can be acquired.

4. The measurement system according to any one of claims 1 through 3, wherein the light source emits light toward the measurement position as the instruction light, the light including color visually distinguishable from the measurement position when emitted to the measurement position.

5. The measurement system according to any one of claims 1 through 4, wherein the light source blinks the instruction light.

6. The measurement system according to any one of claims 1 through 5, wherein the light source emits a light having a specific shape as the instruction light.

7. The measurement system according to any one of claims 1 through 6, further comprising an enlarged image generating unit configured to generate an enlarged image by enlarging the measurement position image while keeping a position corresponding to the measurement position as a center, and
the measurement result image generating unit superimposes the measurement result and the identification mark on the enlarged image to generate the measurement result image.

8. The measurement system according to any one of claims 1 through 7, further comprising a camera shake detection sensor configured to detect camera shake of the image acquisition sensor, wherein,
when the camera shake detection sensor detects the camera shake, the measurement result image generating unit is not generate the measurement result image.

9. The measurement system according to any one of claims 1 through 8, further comprising a distance estimation unit configured to estimate distance to the measurement position based on size and shape of the instruction light in the measurement position image.

10. The measurement system according to any one of claims 1 through 9, further comprising a similarity determining unit configured to determine the degree of similarity between measurement result images based on a common feature existing in each of the measurement result images.

11. The measurement system according to any one of claims 1 through 10, further comprising a first monitoring unit configured to monitor whether or not an image indicating abnormality is contained in the measurement result image, the measurement position image, and/or the preview image.

12. The measurement system according to any one of claims 1 through 11, further comprising a second monitoring unit configured to monitor whether or not physical quantity measured by the physical quantity sensor shows abnormality.

13. The measurement system according to any one of claims 1 through 12, further comprising a position identifying unit configured to identify a position where the measurement position image is acquired.

14. A measurement device comprising:
a physical quantity sensor configured to measure physical quantity at a certain measurement position in a non-contact way;
a light source configured to emit an instruction light toward the measurement position;
an image acquisition sensor configured to acquire a measurement position image containing the measurement position;
a detection unit configured to detect a position where the instruction light exists in the measurement position image to detect a position corresponding to the measurement position in the measurement position image; and
a measurement result image generating unit configured to generate a measurement result image by superimposing, on the measurement position image, the measurement result of physical quantity measured by the physical quantity sensor and an identification mark indicating that position detected by the detection unit is the measurement position of the physical quantity.

15. A measurement method, comprising:
measuring physical quantity at a certain measurement position in a non-contact way;
emitting an instruction light toward the measurement position;
acquiring a measurement position image containing the measurement position;
detecting a position where the instruction light exists in the measurement position image to detect a position corresponding to the measurement position in the measurement position image;
generating a measurement result image by superimposing, on the measurement position image, the measurement result of physical quantity measured by the physical quantity sensor in a non-contact way and an identification mark indicating that the position detected by the detection unit is the measurement position of the physical quantity.

16. A program that causes a computer to execute a measuring method, the measurement method comprising:
measuring physical quantity at a certain measurement position in a non-contact way;
emitting an instruction light toward the measurement position;
acquiring a measurement position image containing the measurement position;
detecting a position where the instruction light exists in the measurement position image to detect a position corresponding to the measurement position in the measurement position image;
generating a measurement result image by superimposing, on the measurement position image, the measurement result of physical quantity measured by the physical quantity sensor in a non-contact way and an identification mark indicating that the position detected by the detection unit is the measurement position of the physical quantity.
